(19) Europäisches Patentamt
European Patent Office
Office européen des brevets

(11) EP 4 722 296 A1

(12) EUROPEAN PATENT APPLICATION
published in accordance with Art. 153(4) EPC

(43) Date of publication:
**08.04.2026 Bulletin 2026/15**

(21) Application number: **24814422.2**

(22) Date of filing: **28.05.2024**

(51) International Patent Classification (IPC):
***C08L 67/04*** *(2006.01)* ***C08K 5/09*** *(2006.01)*
***C08K 5/101*** *(2006.01)*

(52) Cooperative Patent Classification (CPC):
**C08K 5/09; C08K 5/101; C08L 67/04**

(86) International application number:
**PCT/CN2024/095714**

(87) International publication number:
**WO 2024/245225 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 CN 202310621212**

(71) Applicants:
- **Shanghai Bluepha Microbiology Technology Co., Ltd.**
  **Shanghai 200072 (CN)**
- **Jiangsu Lansu Biomaterial Co., Ltd.**
  **Yancheng, Jiangsu 224500 (CN)**

(72) Inventors:
- **MA, Zhiyu**
  **Beijing 102206 (CN)**
- **XU, Yong**
  **Beijing 102206 (CN)**
- **LI, Shenghui**
  **Beijing 102206 (CN)**
- **MA, Yiming**
  **Beijing 102206 (CN)**
- **LI, Teng**
  **Beijing 102206 (CN)**
- **ZHANG, Haoqian**
  **Beijing 102206 (CN)**

(74) Representative: **Witte, Weller & Partner Patentanwälte mbB**
**Postfach 10 54 62**
**70047 Stuttgart (DE)**

# (54) POLYHYDROXYALKANOATE COMPOSITION, POLYHYDROXYALKANOATE MOLDED ARTICLE AND PREPARATION METHOD THEREFOR

(57) The present invention relates to the technical field of bio-based polymer materials, and specifically disclosed are a polyhydroxyalkanoate composition, a polyhydroxyalkanoate molded article, and a preparation method therefor. The polyhydroxyalkanoate composition of the present invention comprises polyhydroxyalkanoate; and at least one of lactic acid or an organic derivative of lactic acid. When lactic acid or a derivative thereof is used as a nucleating agent, the crystallization rate and crystallinity of the polyhydroxyalkanoate during preparation of the molded article can be significantly increased, and the crystallization temperature of polyhydroxyalkanoate having a broad melting range can be reduced, effectively shortening the curing time of the molded article; this has the advantages of high nucleation efficiency, a simpler and more convenient processing approach, and reduced energy consumption.

EP 4 722 296 A1

## Description

### Cross-Reference to Related Applications

This application claims the priority of Chinese Patent Application No. 202310621212.0, filed on May 29, 2023, entitled with 'Polyhydroxyalkanoate Composition, Polyhydroxyalkanoate Molded Article, and Preparation Method Therefor', the entire content of which is incorporated herein by reference in its entirety to the same extent as if fully set forth herein.

### Technical Field

The present invention relates to the technical field of bio-based polymer materials, and in particular to a polyhydroxyalkanoate composition, a polyhydroxyalkanoate molded article, and a preparation method therefor.

### Background Art

Polyhydroxyalkanoate (PHA), as a natural polymeric biomaterial, is an intracellular polyhydroxyalkanoate synthesized by many microorganisms. Most monomers of polyhydroxyalkanoates are 3-hydroxy fatty acids with a chain length of 3 to 14 carbon atoms, and their branch chains are highly variable saturated or unsaturated, straight-chain or branched-chain, aliphatic or aromatic groups. The diversity of composition and structure brings about the diversification of properties, making it have obvious advantages in applications. Meanwhile, polyhydroxyalkanoate is a bio-based and biodegradable polymer in marine environment, which can solve the environmental problems caused by waste plastics, and has excellent biocompatibility and mechanical properties. Therefore, polyhydroxyalkanoates can be processed into various molded articles, such as films, straws, tableware, etc.

Control of crystallization rate is an important factor in the processing rate of polyhydroxyalkanoates. In the prior art, methods such as adding an auxiliary agent such as a nucleating agent are often used to increase the crystallization rate of PHA.

The nucleating agents in the prior art are mainly inorganic substances or metal salts. However, although they can improve the crystallization rate and crystallinity of molded articles traditionally prepared from polyhydroxyalkanoates to a certain extent, the improvement is limited, and they also cause colored molded articles, reduce their transparency, and restrict their applications. In addition, for polyhydroxyalkanoate materials with a wide melting range, there are still problems such as low processing efficiency, difficulty in curing degree, and long time consumption during the preparation process.

### Summary of the Invention

In view of the problems existing in the prior art, one object of the present invention is to provide a polyhydroxyalkanoate composition, which comprises lactic acid and/or an organic derivative thereof, and can effectively solve the problems of low crystallization rate and low processing and curing efficiency of polyhydroxyalkanoates.

The second object of the present invention is to provide a polyhydroxyalkanoate molded article, which is prepared from the above polyhydroxyalkanoate composition.

The third object of the present invention is to provide a preparation method for preparing the above polyhydroxyalkanoate molded article.

In order to achieve the above objects, the technical solution adopted by the present invention is as follows.

In the first aspect, the present invention provides a polyhydroxyalkanoate composition, comprising:

a polyhydroxyalkanoate; and at least one of lactic acid or organic derivatives thereof represented by the following general formula I:

$$R^2CH_2\text{-}CH(OH)\text{-}COYR^1 \qquad \text{I}$$

wherein $R^1$ is H or a hydrocarbyl, $R^2$ is H or a hydrocarbyl, and Y is any one of C, O, N, and S.

In the present invention, in the general formula I, $R^1$ and $R^2$ are each H or a C1-C16 short-chain hydrocarbyl, and Y is any one of C, O, N, and S. That is, the composition comprises a short-chain ketone, ester/acid, sulfur-containing, or nitrogen-containing lactic acid organic derivative represented by the general formula I.

In the present invention, when Y is O, and $R^1$ and $R^2$ are each H in the general formula I, it is lactic acid. Lactic acid can be divided into L-lactic acid and D-lactic acid according to its chiral structure. In the present invention, the lactic acid is

selected from L-lactic acid, D-lactic acid, or a combination thereof; wherein, in the combination of L-lactic acid and D-lactic acid, the ratio of L-lactic acid to D-lactic acid is 0.01~99.99 : 99.99~0.01.

In the present invention, the lactic acid derivatives can be further divided into organic ester derivatives and organic acid derivatives of lactic acid.

When Y is O and $R^1$ is a C1-C16 hydrocarbyl in the general formula I, the lactic acid organic derivative is a lactic acid ester derivative with the structure of $R^2CH_2$-CH(OH)-$COOR^1$, where $R^2$ is H or a C1-C16 hydrocarbyl; and/or, when Y is O, $R^1$ is H, and $R^2$ is a C1-C16 hydrocarbyl in the general formula I, the lactic acid organic derivative is a lactic acid organic acid derivative with the structure of $R^2CH_2$-CH(OH)-COOH.

The organic ester derivatives of lactic acid according to the present invention include lactic acid ester derivatives with the structure $R^2CH_2$-CH(OH)-$COOR^1$ formed by substitution of lactic acid (including L-lactic acid, D-lactic acid, or any combination thereof, preferably L-lactic acid), wherein $R^1$ is a C1-C16 hydrocarbyl, $R^2$ is H or a C1-C16 hydrocarbyl, and $R^1$ and $R^2$ are preferably C1-C10 hydrocarbyls, C1-C8 hydrocarbyls, or C1-C4 hydrocarbyls, examples of which include: methyl, ethyl, propyl, butyl, isopentyl, phenyl, benzyl, tetradecyl, and hexadecyl. In some specific embodiments, the organic ester derivative of lactic acid can be methyl lactate, ethyl lactate, propyl lactate, butyl lactate, isopentyl lactate, benzyl lactate, tetradecyl lactate, hexadecyl lactate, or methyl 3-phenyl lactate.

In the present invention, the organic acid derivatives of lactic acid include organic acid derivatives retaining the hydroxyl and carboxyl groups of lactic acid (including L-lactic acid, D-lactic acid, or any combination thereof, preferably L-lactic acid), with the structure $R^2CH_2$-CH(OH)-COOH, wherein $R^2$ is a C1-C16 hydrocarbyl, more preferably a C1-C10 hydrocarbyl, C1-C8 hydrocarbyl, or C1-C4 hydrocarbyl, examples of which include: methyl, ethyl, propyl, butyl, and phenyl; specifically, it can be 3-phenyl lactic acid.

In addition to the above-exemplified lactic acid organic derivatives, it can also be inferred that the organic derivatives where Y is C, N, or S (carbon, nitrogen or sulfur) in the general formula I have structures similar to the above-exemplified organic derivatives (where Y is O), all retaining the $\alpha$-hydroxyl group of lactic acid organic derivatives, and it can be inferred that they can also achieve similar effects. Therefore, the present invention should not be limited to the specific lactic acid organic derivatives exemplified above.

In a specific embodiment, the composition comprises lactic acid.

In a specific embodiment, the composition comprises L-lactic acid, D-lactic acid, or a mixture thereof in any ratio, for example, the ratio of L-lactic acid to D-lactic acid is 0.01~99.99 : 99.99~0.01, preferably 0.1~1 : 1~0.1, such as 0.1:1, 1:9, 1:8, 1:5, 1:4, 0.5:1, 1:1, 1:0.5, 4:1, 5:1, 8:1, 9:1, 1:0.1.

In a specific embodiment, the composition comprises any one selected from L-lactic acid, D-lactic acid, and DL-lactic acid, or a combination thereof; wherein DL-lactic acid is lactic acid with a ratio of L-lactic acid to D-lactic acid of 1:1.

In a specific embodiment, the composition comprises L-lactic acid.

In a specific embodiment, the lactic acid or lactic acid derivative functions as a nucleating agent in the composition.

In a specific embodiment, the amount of the lactic acid and/or the lactic acid derivative is 0.01%-20%; preferably 0.1%-10%; more preferably 0.1%-3%, such as 0.1%-2%, 0.1%-1.5%, 0.5%-1.5% by mass of the polyhydroxyalkanoate; typically and non-limitingly, the amount of the lactic acid and/or the lactic acid derivative can be, for example, 0.1%, 0.2%, 0.3%, 0.4%, 0.5%, 0.7%, 1%, 1.2%, 1.5%, 2%, 2.5%, or 3% by mass of the polyhydroxyalkanoate.

The polyhydroxyalkanoate according to the present invention may be a single polymer or a composition of two or more polymers, wherein each polymer may comprise one or more polymerized monomers (i.e., the polymer may have one or more structural units).

Specifically, any polymer comprises a structural unit represented by the following general formula II:

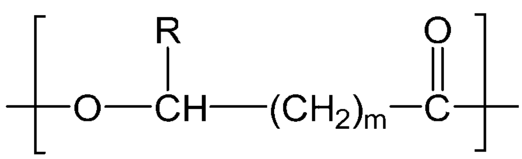

II

In the general formula II, R represents an alkyl represented by $C_pH_{2p+1}$, and p represents an integer from 1 to 15, preferably an integer from 1 to 10, more preferably an integer from 1 to 8. Examples of R include a linear or branched alkyl such as methyl, ethyl, propyl, butyl, isobutyl, tert-butyl, pentyl, hexyl, etc.;

m is 1, 2, or 3; the general formula II represents a 3-hydroxyalkanoate structural unit when m=1; a 4-hydroxyalkanoate structural unit when m=2; and a 5-hydroxyalkanoate structural unit when m=3; among them, the 3-hydroxyalkanoate structural unit and the 4-hydroxyalkanoate structural unit are more common, such as 3-hydroxybutyrate structural unit (hereinafter sometimes referred to as 3HB) and 4-hydroxybutyrate structural unit (hereinafter sometimes referred to as 4HB).

In a specific embodiment, the polyhydroxyalkanoate according to the present invention comprises at least one

poly(3-hydroxyalkanoate).

Further, the poly(3-hydroxyalkanoate) comprises only 3-hydroxybutyrate structural unit, or comprises 3-hydroxybutyrate structural unit and other hydroxyalkanoate structural units.

Further, the other hydroxyalkanoate structural units include one or more of 3-hydroxypropionate, 3-hydroxyvalerate, 3-hydroxyhexanoate, 3-hydroxyheptanoate, 3-hydroxyoctanoate, 3-hydroxynonanoate, 3-hydroxydecanoate, 3-hydroxyundecanoate, or 4-hydroxybutyrate; preferably 3-hydroxyhexanoate.

Specifically, specific examples of poly(3-hydroxyalkanoate) include: poly(3-hydroxybutyrate), poly(3-hydroxybutyrate-co-3-hydroxypropionate), poly(3-hydroxybutyrate-co-3-hydroxyvalerate) (abbreviation: P3HB3HV), poly(3-hydroxybutyrate-co-3-hydroxyvalerate-co-3-hydroxyhexanoate), poly(3-hydroxybutyrate-co-3-hydroxyhexanoate) (abbreviation: P3HB3HH), poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), poly(3-hydroxybutyrate-co-4-hydroxybutyrate) (abbreviation: P3HB4HB), etc. In particular, considering on processability and mechanical properties, poly(3-hydroxybutyrate-co-3-hydroxyhexanoate) is preferred.

The lactic acid or the lactic acid organic derivative in the composition of the present invention can generally accelerate crystallization regardless of the proportion of structural monomers in the polyhydroxyalkanoate in the composition. This may be due to the fact that the specific structure contained in the lactic acid or the organic derivative thereof can better "combine" with polyhydroxyalkanoate and has a tendency to "induce" the crystallization of polyhydroxyalkanoate. The production method of the polyhydroxyalkanoate according to the present invention is not particularly limited, and it can be produced by chemical synthesis or by microorganisms. Polyhydroxyalkanoate produced by microorganisms is particularly preferred. In the polyhydroxyalkanoate produced by microorganisms, all 3-hydroxyalkanoate structural units are contained in the form of (R)-3-hydroxyalkanoate structural units. The poly(3-hydroxyalkanoate) includes the copolymer of 3-hydroxybutyrate structural unit and an other structural unit, and in the poly(3-hydroxyalkanoate), the average content ratio of the 3-hydroxybutyrate structural unit to the other structural unit is 50/50 to 99/1 (mol%/mol%), preferably 80/20 to 94/6 (mol%/mol%); and when the polyhydroxyalkanoate raw material is a mixture of two or more polyhydroxyalkanoates, the average content ratio refers to the molar ratio of various monomers contained in the entire mixture.

Further, the weight-average molecular weight of the polyhydroxyalkanoate is 100,000 to 1,000,000 Da; preferably 200,000 to 900,000 Da; more preferably 300,000 to 800,000 Da, or 600,000 to 800,000 Da. When the weight-average molecular weight is less than 100,000 Da, the mechanical properties of the obtained polyhydroxyalkanoate resin molded article tend to be low. On the other hand, when the weight-average molecular weight exceeds 1,000,000 Da, the load on the machine during melt processing tends to be high, and the productivity tends to be low.

The polyhydroxyalkanoate composition of the present invention can be prepared by conventional techniques and equipment known in the art, for example, it can be directly mixed into powder in a mixing device, and further, for example, blended at room temperature in a high-speed mixer.

In order to facilitate the processing of the polyhydroxyalkanoate composition of the present invention into a molded article, the polyhydroxyalkanoate composition may further include a certain amount of an auxiliary agent to increase the fluidity of the material and facilitate molding.

Further, the auxiliary agent may be an auxiliary agent beneficial to fluidity, such as a dispersant, a plasticizer, an internal lubricant, an external lubricant, or a mold release agent. For example, specific auxiliary agents may be one or more selected from amides such as ethylene bis stearamide (EBS), erucamide, oleamide, linoleamide, palmitamide, stearamide, etc., polyethylene wax, rice bran wax, 8024 (amide wax rheological auxiliary agent), silicone oil auxiliary agents, stearic acid, stearates, epoxidized soybean oil and other auxiliary agents with dispersing and lubricating effects.

Further, the addition amount of the auxiliary agent is about 2%-5% by mass of the polyhydroxyalkanoate.

In a second aspect, the present invention provides a polyhydroxyalkanoate molded article, which is prepared from the polyhydroxyalkanoate composition according to the present invention.

The polyhydroxyalkanoate molded article of the present invention may include various forms, such as granules, films, fibers, non-woven fabrics, straws, plates, paper-plastic products, sheets, etc.

The polyhydroxyalkanoate molded article of the present invention can be prepared by a thermoforming method or a non-thermoforming method such as solution casting. Therefore, in a third aspect, the present invention also provides a method for preparing the above-mentioned polyhydroxyalkanoate molded article.

In a specific embodiment, the method for preparing the above-mentioned polyhydroxyalkanoate molded article includes:

(1) a step of melting the uniformly mixed polyhydroxyalkanoate composition at a temperature higher than the melting point of the polyhydroxyalkanoate to form a melt;
(2) a step of crystallizing and molding the melt from step (1) at a temperature of 65°C or lower.

In a specific embodiment, in step (1) of the above preparation method, the melt temperature is 140-180°C.

In a specific embodiment, in step (2) of the above preparation method, the melt is crystallized and molded at a temperature of 40°C or lower, for example, 20-40°C.

In a specific embodiment, the polyhydroxyalkanoate molded article of the present invention can be prepared by various thermoforming methods such as extrusion molding, injection molding, calendering, casting, blow molding, biaxial stretching, etc.

In a specific embodiment, the polyhydroxyalkanoate molded article of the present invention is prepared into a pallet molded article by an extrusion granulation method, including:

(1) a step of melt extrusion: melt-extruding the uniformly mixed polyhydroxyalkanoate composition in an extrusion granulation equipment, wherein the temperature of the extrusion granulation equipment is set to 50-180°C;
(2) a step of granulation: crystallizing and granulating the melt extrudate at a temperature of 65°C or lower.

In the step (1) of the above extrusion granulation method, the extrusion granulation equipment can be conventional granulation equipment in the art, such as parallel co-rotating twin-screw extruders, parallel counter-rotating twin-screw extruders, conical twin-screw extruders with different length-diameter ratios, and single-screw extruders. The temperature of the extrusion granulation equipment is set in the range of 50°C to 180°C, the rotation speed of the main machine is 50-500r/min, and the feeding amount or production capacity is adjusted according to the actual production conditions.

In a specific embodiment, while maintaining crystallization efficiency and processing effect, a crystallization temperature with a lower energy consumption can be adopted. In step (2), the melt extrudate is crystallized and granulated at a temperature of 40°C or lower, for example, 20°C to 40°C.

In a specific embodiment, in step (2), granulating can be carried out by means of air-cooled strand cutting, water-bath strand cutting, face-cutting hot cutting, water ring cutting, underwater pelletizing and other pelletizing methods.

In a specific embodiment, after step (2), the extrusion granulation method further includes a step of drying the prepared pellets. Specifically, a blast drying oven can be used to dry the prepared pellets to eliminate the influence of moisture on the particle performance and ensure complete crystallization of the pellets at the same time.

## Beneficial Effects

(1) The research from the present invention reveals that lactic acid or an organic derivative thereof as a nucleating agent can significantly increase the crystallization rate and crystallinity when polyhydroxyalkanoate is prepared into a molded article.
(2) Conventionally, the crystallization temperature required for preparing polyhydroxyalkanoate molded article is about 40-65°C. In the present invention, lactic acid or its organic derivatives can reduce the crystallization temperature of the polyhydroxyalkanoate with a wide melting range to 20-40°C, effectively shorten the solidification time of molded article with high nucleation efficiency. At the same time, by adopting a lower crystallization temperature without continuous heating, molded article with good crystallization and molding can be obtained, making the processing method simpler and more convenient and effectively reducing energy consumption.

## Specific Embodiments

In the field of thermoplastic processing, the crystallization of polymer materials is microscopically a process of partially arranging polymer chains, during which the polymer chains fold up to form ordered regions called lamellae, which can stack into larger spherical structures called spherulites, thereby forming macroscopic crystalline molded article. In the present invention, polyhydroxyalkanoate (PHA) is used as a polymer raw material with excellent full biodegradability, and its physical properties such as glass transition temperature, crystallization temperature, melting point and melting range are quite different from those of other materials such as polyglycolic acid (PGA), polylactic acid (PLA) and poly-ε-caprolactone (PCL). In conventional processing, materials such as PLA can be quickly crystallized and molded easily, while PHA often cannot be quickly crystallized and molded during processing due to its low glass transition temperature (the Tg of PHA is about 0°C, and the Tg of PLA is about 60°C).

Considering the particularity of polymer material crystallization, the inventors specifically studied the effects of nucleating agents commonly used in the field of thermoplastic processing for polymer material crystallization, such as some inorganic nucleating agents including nano calcium carbonate, nano silicon dioxide, terephthalic acid, titanium dioxide, hydrotalcite and boron nitride, organic nucleating agents such as nucleating agents specific for polylactic acid (PLA) (e.g., TMC-306, TMC-200), and lactic acid or its derivatives used in the present invention, on the crystallization effect

of PHA, and found a more suitable scheme for promoting PHA crystallization.

The specific embodiments of the present invention will be described in detail below. It should be understood that the specific embodiments described herein are only used to illustrate and explain the present invention, and are not intended to limit the present invention. The present invention will be described in detail through examples below. In the following examples, unless otherwise specified, all materials used can be obtained commercially; unless otherwise specified, the methods used are conventional methods in the art.

The endpoints and any values of the ranges disclosed herein are not limited to the precise ranges or values, and these ranges or values should be understood to include values close to these ranges or values. For numerical ranges, the endpoint values of various ranges, the endpoint values of various range and individual point values, and individual point values can be combined with each other to obtain one or more new numerical ranges, which should be regarded as specifically disclosed herein.

The present invention will be described in more detail through the following examples, but the examples do not constitute a limitation to the present invention. All raw materials used in the following examples and comparative examples are commercially available unless otherwise specified.

**Raw materials and sources:**

Poly(3-hydroxybutyrate-co-3-hydroxyhexanoate) (PHBH), product number: BP350, Beijing Bluepha Co., Ltd., content of 3HB (3-hydroxybutyrate unit) 89%, weight-average molecular weight about 600,000-800,000.

L-lactic acid ((S)-2-hydroxypropanoic acid), product number: L118493, Aladdin, >98.0%(T), refractive index 1.4260 - 1.4310, specific rotation -10.0 - 15.0 deg (C=2.5, 1.5mol/L NaOH sol.).

D-lactic acid ((R)-2-hydroxypropanoic acid), product number: S161106, Aladdin, >90.0%(T), refractive index 1.43, specific rotation 13° (C=2.5, 1.5mol/L NaOH).

Methyl lactate (methyl DL-lactate), product number: M158854, Aladdin, >98.0%(GC), refractive index 1.413.

Ethyl lactate (ethyl α-hydroxypropionate), product number: E108230, Aladdin, 98.0%(GC), refractive index 1.4125.

Butyl lactate (butyl α-hydroxypropionate), product number: B111190, Aladdin, 98.0%(GC), refractive index 1.421, specific rotation -10.0 - 13.0 deg (neat).

**Equipment:**

High-speed mixer: Zhangjiagang Zhengde Machinery Factory, model: SHR-50L.

Twin-screw extrusion granulator: Nanjing KYmach Technologies Corp. , Ltd., model: HK36.

**Preparation method of polyhydroxyalkanoate pellet moldings in Experimental Examples 1-35:**

Pellet moldings were produced by using twin-screw extrusion granulation; and the formulations of polyhydroxyalkanoate compositions used in Experimental Examples 1-35 (components in the formulations are calculated in parts by mass) are shown in Tables 1-4 respectively. The specific production steps are as follows.

(1) Mixing: polyhydroxyalkanoate powder and nucleating agent was placed in a high-speed mixer, and mixed at room temperature with a mixing rotation speed of 200 r/min for a mixing time of 5 min. After mixing, the mixture was placed in the feeding hopper of the twin-screw extruder.

(2) Melt extrusion: the conditions of the extrusion granulation equipment was set, and the melt extrusion was performed at a melt temperature of 150°C.

(3) Granulation: the granulation was performed by adopting a underwater cutting system, wherein the water bath heating temperature was set as shown in Tables 1-4.

**Method for evaluating the performance of polyhydroxyalkanoate pellet moldings in Experimental Examples 1 to 35:**

**Crystallinity:**

DSC curve was obtained on a differential scanning calorimeter (Model DSC25, manufactured by TA Instrument) with 2-10 mg of the polyhydroxyalkanoate moldings, and temperature rising from -50°C to 180°C at a heating rate of 10°C/min. Further, data such as glass transition temperature, melting temperature, melting peak area, and cold crystallization peak area in the DSC curve of the polyhydroxyalkanoate composition were obtained.

$$\text{Crystallinity (\%)} = 100\% \times \text{melting enthalpy} / 100\% \text{ crystalline melting enthalpy;}$$

wherein, the 100% crystalline melting enthalpy is the theoretical enthalpy of 100% crystalline material. A higher crystallinity indicates a higher crystallinity of the moldings, which is more conducive to subsequent processing and molding.

**Difficulty of thermoplastic processing of pellet moldings:**

○: Continuous and stable processing is possible, and the solidification time of the moldings is short.
△: Extrusion is stable during thermoplastic processing, and the solidification time of the moldings is relatively long.
×: The extruder is unstable during extrusion, and the solidification time of the molding is long.

**Weight-average molecular weight:**

The weight-average molecular weight was measured by gel permeation chromatography (HPLC GPC system manufactured by Shimadzu) using a chloroform solution and converted by polystyrene. As the chromatographic column in the gel permeation chromatograph, any chromatographic column suitable for measuring the weight-average molecular weight may be used.

The performance evaluation results of the polyhydroxyalkanoate pellets moldings in the above Experimental Examples 1 to 35 are shown in Tables 1 to 4.

**Example 1: Effect of lactic acid, lactic acid organic derivatives, and similar substances on nucleation of the moldings**

Table 1

| Experimental Example | 1 | 2 | 3 | 4 | 5 | 6 | 7 | 8 |
|---|---|---|---|---|---|---|---|---|
| BP350 | 100 | 100 | 100 | 100 | 100 | 100 | 100 | 100 |
| L-lactic acid | 1 | | 0.5 | | | | | |
| D-lactic acid | | 1 | 0.5 | | | | | |
| Lactide | | | | 1 | | | | |
| Methyl lactate | | | | | 1 | | | |
| Ethyl lactate | | | | | | 1 | | |
| Butyl lactate | | | | | | | 1 | |
| Total | 101 | 101 | 101 | 101 | 101 | 101 | 101 | 100 |
| Melting temperature (°C) | 150 | 150 | 150 | 150 | 150 | 150 | 150 | 150 |
| Water bath temperature (°C) | 50 | 50 | 50 | 50 | 50 | 50 | 50 | 50 |
| Crystallinity (%) | 29.59 | 28.34 | 26.02 | 2.37 | 11.25 | 12.86 | 16.31 | 8.50 |

It can be seen from Experimental Examples 1-8 that, compared with the blank control Experimental Example 8, both the addition of lactic acid (Experimental Examples 1-3) and the addition of its organic derivatives (Experimental Examples 4-7) can improve the PHA crystallization nucleation ability. In comparison, lactic acid has more excellent crystallization nucleation ability, and its crystallization nucleation effect is much greater than that of lactic acid organic ester derivatives. In addition, the study found that lactide, which is a six-membered ring formed by lactic acid dimerization, reduced the crystallinity of PHA (Experimental Example 4). It can be seen that the addition of six-membered cyclic lactide without retaining $\alpha$-hydroxy to PHA does not play a role in improving crystallinity, which also verifies that retaining the $\alpha$-hydroxy of lactic acid organic derivatives can obtain a similar effect of promoting crystallization. Therefore, the present invention should not be limited to the specific $\alpha$-hydroxy-containing lactic acid organic derivatives exemplified above.

**Example 2: Effect of lactic acid and other existing nucleating agents on the molding effect of the moldings**

Table 2

| Experimental Example | 1 | 9 | 10 | 11 | 12 | 13 | 14 | 15 | 16 | 17 | 18 | 19 |
|---|---|---|---|---|---|---|---|---|---|---|---|---|
| BP350 | 100 | 100 | 100 | 100 | 100 | 100 | 100 | 100 | 100 | 100 | 100 | 100 |
| L-lactic acid | 1 | | | | | | | | | | | |
| nano calcium | | 1 | | | | | | | | | | |
| carbonate | | | | | | | | | | | | |
| nano silica | | | 1 | | | | | | | | | |
| terephthalic acid | | | | 1 | | | | | | | | |
| titanium dioxide | | | | | 1 | | | | | | | |
| hydrotalcite | | | | | | 1 | | | | | | |
| boron nitride | | | | | | | 1 | | | | | |
| TMC-306 | | | | | | | | 1 | | | | |
| TMC-200 | | | | | | | | | 1 | | | |
| 16-hydroxyhexade canoic acid | | | | | | | | | | 1 | | |
| 15-hydroxypentad ecanoic acid | | | | | | | | | | | 1 | |
| docosanol | | | | | | | | | | | | 1 |
| Total | 101 | 101 | 101 | 101 | 101 | 101 | 101 | 101 | 101 | 101 | 101 | 101 |
| Melting temperature (°C) | 150 | 150 | 150 | 150 | 150 | 150 | 150 | 150 | 150 | 150 | 150 | 150 |
| Water bath temperature (°C) | 50 | 50 | 50 | 50 | 50 | 50 | 50 | 50 | 50 | 50 | 50 | 50 |
| Crystallinity (%) | 29.59 | 23.14 | 22.40 | 24.84 | 23.64 | 20.48 | 23.91 | 22.74 | 27.88 | 25.39 | 25.21 | 25.71 |

Comparing Experimental Example 1 with Experimental Examples 9-19, it can be seen that the crystallinity of the lactic acid nucleating agent is significantly improved compared with other types of nucleating agents, and the nucleation efficiency is higher than that of other existing types of nucleating agents. In addition, compared with other existing nucleating agents, lactic acid is more easily available as a raw material, and has good applicability, and the prepared moldings have good environmental and biological friendliness.

**Example 3: Effect of adding different parts by weight of lactic acid on the nucleation effect and performance of moldings**

Table 3

| Experimental Example | 20 | 21 | 22 | 23 | 24 | 25 | 26 | 27 | 28 | 29 | 30 |
|---|---|---|---|---|---|---|---|---|---|---|---|
| BP350 | 100 | 100 | 100 | 100 | 100 | 100 | 100 | 100 | 100 | 100 | 100 |
| L-lactic acid | 0.1 | 0.2 | 0.3 | 0.4 | 0.5 | 0.7 | 1.2 | 1.5 | 2 | 2.5 | 3 |
| Total | 100.1 | 100.2 | 100.3 | 100.4 | 100.5 | 100.7 | 101.2 | 101.5 | 102 | 102.5 | 103 |
| Melting Temperature (°C) | 150 | 150 | 150 | 150 | 150 | 150 | 150 | 150 | 150 | 150 | 150 |
| Water Bath Temperature (°C) | 50 | 50 | 50 | 50 | 50 | 50 | 50 | 50 | 50 | 50 | 50 |
| Crystallinity (%) | 26.12 | 26.73 | 25.93 | 29.70 | 29.64 | 29.80 | 28.74 | 29.27 | 26.67 | 28.12 | 25.41 |

For crystallinity, the higher the crystallinity, the better the nucleation efficiency. It can be seen from Example 1 and Examples 20-30 that, compared with the blank control Experimental Example 8, the addition of lactic acid results in a significantly increased crystallinity for the raw material. Within the range of an addition amount of 0.1-3 parts in the above experimental examples, lactic acid has the effect of promoting crystallization, making the crystallization effect better and the prepared moldings have better processability. In this example, it was found that when the addition amount of lactic acid is less than 0.01%, the effect is not obvious; and when the addition amount of lactic acid is more than 20%, it tends to cause depolymerization of the resin and produce an odor. Therefore, the addition amount of lactic acid can range from 0.01% to 20%.

**Example 4: Other effects of lactic acid and other auxiliary agent on the processing of moldings**

Table 4

| Experimental Example | 31 | 32 | 33 | 34 | 35 |
|---|---|---|---|---|---|
| BP350 | 100 | 100 | 100 | 100 | 100 |
| L-lactic acid | 1 | | | | |
| Behenic Acid | | 1 | | | |
| Boron Nitride | | | 1 | | |
| 16-Hydroxyhexadec anoic Acid | | | | 1 | |
| TMC-200 | | | | | 1 |
| Total | 101 | 101 | 101 | 101 | 101 |
| Melting Temperature (°C) | 150 | 150 | 150 | 150 | 150 |
| Water Bath | 38 | 38 | 38 | 38 | 38 |
| Temperature (°C) | | | | | |

(continued)

| Experimental Example | 31 | 32 | 33 | 34 | 35 |
|---|---|---|---|---|---|
| Curing Time (s) | 10 | 30 | Uncurable | 60 | 85 |
| Processing Difficulty | ○ | △ | × | △ | △ |

Wherein, the meanings of the symbols are as follows:

○: Continuous and stable processing is possible, and the solidification time of the moldings is short.
△: Extrusion is stable during thermoplastic processing, and the solidification time of the moldings is relatively long.
×: The extruder is unstable duiring extrusion, and the solidification time of the moldings is long.

By comparing the data in Table 4, it is found that when the crystallization temperature is lowered, i.e., the water bath temperature is set to 20°C - 40°C (38°C), adding lactic acid (Experimental Example 31) can effectively solidify PHA in a short time, improve processing efficiency, and reduce processing difficulty compared to adding an auxiliary agent such as behenic acid, boron nitride, 16-hydroxyhexadecanoic acid, and TMC-200 (Experimental Examples 32-35). It can be seen that after adding lactic acid, a lower crystallization temperature can be used, which not only ensures the crystallization quality of the moldins, reduces solidification time to improve efficiency, but also reduces energy consumption in actual production.

Although the present invention has been described in detail with general descriptions and specific embodiments above, it is obvious to those skilled in the art that some modifications or improvements can be made on the basis of the present invention. Therefore, these modifications or improvements made without departing from the spirit of the present invention shall fall within the scope of protection claimed by the present invention.

## Claims

**1.** A polyhydroxyalkanoate composition, comprising:

a polyhydroxyalkanoate; and at least one of lactic acid or lactic acid organic derivatives represented by the following general formula I:

$$R^2CH_2\text{-}CH(OH)\text{-}COYR^1 \qquad \text{I}$$

wherein $R^1$ is H or a hydrocarbyl, $R^2$ is H or a hydrocarbyl, and Y is any one of C, O, N, and S.

**2.** The polyhydroxyalkanoate composition according to claim 1, wherein Y is O, and Rand $R^2$ are respectively H in general formula I, that is, the composition comprises lactic acid, and the lactic acid is selected from L-lactic acid, D-lactic acid or a combination thereof;
wherein, in the combination of L-lactic acid and D-lactic acid, the ratio of L-lactic acid to D-lactic acid is 0.01~99.99 : 99.99~0.01.

**3.** The polyhydroxyalkanoate composition according to claim 1, wherein in general formula I, Y is O, $R^1$ is a C1-C16 hydrocarbyl, and $R^2$ is H or a C1-C16 hydrocarbyl; or,
in general formula I, Y is O, $R^1$ is H, and $R^2$ is a C1-C16 hydrocarbyl.

**4.** The polyhydroxyalkanoate composition according to claim 3, wherein the lactic acid organic derivatives include methyl lactate, ethyl lactate, propyl lactate, butyl lactate, isoamyl lactate, benzyl lactate, tetradecyl lactate, cetyl lactate, methyl 3-phenyllactate, and 3-phenyllactic acid.

**5.** The polyhydroxyalkanoate composition according to any one of claims 1-4, wherein the added amount of the lactic acid and/or the lactic acid organic derivative is 0.01%-20% by mass of the polyhydroxyalkanoate.

**6.** The polyhydroxyalkanoate composition according to claim 1, wherein the polyhydroxyalkanoate comprises a structural unit represented by the following general formula II:

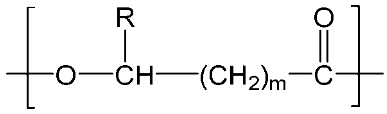

II

wherein R represents an hydrocarbyl shown as $C_pH_{2p+1}$, p represents an integer of 1~15, preferably an integer of 1~10, more preferably an integer of 1~8;
m is 1, 2 or 3.

**7.** A polyhydroxyalkanoate molded article prepared from the polyhydroxyalkanoate composition according to any one of claims 1-6.

**8.** A preparation method of the polyhydroxyalkanoate molded article according to claim 7, comprising:

(1) a step of melting the uniformly mixed polyhydroxyalkanoate composition according to any one of claims 1-6 at a temperature higher than the melting point of the polyhydroxyalkanoate to form a melt;
(2) a step of crystallizing and molding the melt from step (1) at a temperature of 65°C or lower.

**9.** The preparation method of the polyhydroxyalkanoate molded article according to claim 8, **characterized in that**, in step (2), the melt is crystallized and molded at a temperature of 40°C or lower.

**10.** The preparation method according to claim 8 or 9, **characterized in that**, the polyhydroxyalkanoate molded article is prepared into a pellet molded article by an extrusion granulation method, comprising:

(1) a step of melt extrusion: the uniformly mixed polyhydroxyalkanoate composition according to any one of claims 1-6 is melt-extruded in an extrusion granulation equipment, and the temperature of the extrusion granulation equipment is set to 50~180°C;
(2) a step of granulation: the melt extrudate is crystallized and granulated at a temperature of 20~40°C.

## INTERNATIONAL SEARCH REPORT

International application No.
**PCT/CN2024/095714**

**A. CLASSIFICATION OF SUBJECT MATTER**

C08L67/04(2006.01)i; C08K5/09(2006.01)i; C08K5/101(2006.01)i

According to International Patent Classification (IPC) or to both national classification and IPC

**B. FIELDS SEARCHED**

Minimum documentation searched (classification system followed by classification symbols)

C08L67/-, C08K5/-

Documentation searched other than minimum documentation to the extent that such documents are included in the fields searched

Electronic data base consulted during the international search (name of data base and, where practicable, search terms used)

CNTXT, WOTXT, EPTXT, USTXT, JPTXT, DWPI, WPABS, CNKI, WEB of SCIENCE: 聚羟基脂肪酸酯, 聚羟基链烷酸酯, 羟基羧酸, 羟基酸, 乳酸, 羟基丙酸, 成型体, 模塑体, 挤出, 结晶, polyhydroxyalkanoate, hydroxycarboxylic acid, hydroxy acid, lactic acid, hydroxy propionic acid, molded bodies, extrusion, crystallization

**C. DOCUMENTS CONSIDERED TO BE RELEVANT**

| Category* | Citation of document, with indication, where appropriate, of the relevant passages | Relevant to claim No. |
|---|---|---|
| X | CN 115232456 A (BEIJING BLUEPHA MICROBIOLOGY TECHNOLOGY CO., LTD.) 25 October 2022 (2022-10-25)<br>description, paragraphs 0008-0028, 0032, and 0035-0039 | 1-10 |
| X | CN 115806733 A (BEIJING BLUEPHA MICROBIOLOGY TECHNOLOGY CO., LTD. et al.) 17 March 2023 (2023-03-17)<br>description, paragraphs 0055-0062, 0066-0070, 0073-0075 and 0111-0114 | 1-10 |
| PX | CN 117209980 A (BEIJING BLUEPHA MICROBIOLOGY TECHNOLOGY CO., LTD. et al.) 12 December 2023 (2023-12-12)<br>claims 1-10 | 1-10 |
| PX | CN 116855052 A (BEIJING BLUEPHA MICROBIOLOGY TECHNOLOGY CO., LTD. et al.) 10 October 2023 (2023-10-10)<br>description, paragraphs 0010-0023, 0030-0034, 0039-0048 and 0069-0070 | 1, 3-10 |
| A | US 2009099313 A1 (E. I. DU PONT DE NEMOURS AND COMPANY) 16 April 2009 (2009-04-16)<br>entire document | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 August 2024** | **28 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/095714**

| Patent document cited in search report | | | Publication date (day/month/year) | Patent family member(s) | | | Publication date (day/month/year) |
|---|---|---|---|---|---|---|---|
| CN | 115232456 | A | 25 October 2022 | CN | 115232456 | B | 17 January 2023 |
| | | | | WO | 2024060635 | A1 | 28 March 2024 |
| CN | 115806733 | A | 17 March 2023 | CN | 115806733 | B | 25 April 2023 |
| | | | | HK | 40084981 | A0 | 28 July 2023 |
| | | | | HK | 40084981 | A1 | 15 September 2023 |
| CN | 117209980 | A | 12 December 2023 | CN | 117209980 | B | 30 April 2024 |
| CN | 116855052 | A | 10 October 2023 | CN | 116855052 | B | 22 December 2023 |
| | | | | HK | 40097165 | A0 | 08 March 2024 |
| US | 2009099313 | A1 | 16 April 2009 | WO | 2009048797 | A1 | 16 April 2009 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310621212